# EUROPÄISCHE PATENTANMELDUNG

(11) **EP 1 641 069 A2**
(43) Veröffentlichungstag der Anmeldung: **29.03.2006**
(21) Anmeldenummer: 05021004.6
(22) Anmeldetag: 27.09.2005
(51) Int. Cl.: H01Q 1/32, H01Q 1/12

(54) **Antenne und Verfahren zur Befestigung einer Antenne an einem Fahrzeug mittels Klemmkraft, erzeugt vorzugsweise durch einem Schiebevorgang**

(30) Priorität: 28.09.2004 DE 102004046979; 19.09.2005 DE 102005044611
(71) Anmelder: Hirschmann Car Communication GmbH, 72654 Neckartenzlingen (DE)
(72) Erfinder: Blickle, Günther, 72149 Neustetten (DE)
(74) Vertreter: Thul, Hermann

(57) **Zusammenfassung**

Die Erfindung betrifft eine Vorrichtung und ein Verfahren zur Befestigung einer Antenne, insbesondere Dachantenne (1) an einer Fahrzeugkarosserie (12) mit einer außerhalb der Karosserie angeordneten, mit der Dachantenne (1) verbundenen Bodenplatte (2) und mit einem Stützelement innerhalb der Karosserie, das mittels einer Gewindeverbindung mit der Bodenplatte (2) verbindbar ist, wobei das Stützelement als Bajonettscheibe (6) ausgebildet ist, wobei die Gewindeverbindung (Schraube 3) eine Spannfeder (Druckfeder (5) aufweist, die eine Spannkraft zwischen der Bodenplatte (2) und der Bajonettscheibe (6) herstellt, wobei zwischen Bodenplatte (2) und Bajonettscheibe (6) Führungselemente (Bolzen 8, Schlitzöffnungen 9) vorgesehen sind, die eine begrenzte Verschiebung der Bodenplatte (2) und der Bajonettscheibe (6) gegeneinander erlauben, wobei die Bajvnettscheibe (6) Begrenzungselemente (Erhebungen 10) aufweist, die zur Öffnung in der Karosserie (dreieckige Öffnung 11) passen und wobei zwischen Bodenplatte (2) und Bajonettscheibe (6) Abstandselemente (13) mit entsprechenden Ausnehmungen (14) im zweiten Bauteil vorgesehen sind, die in der einen Verschiebestellung der Bodenplatte (2) zur Bajonettscheibe (6) einen Abstand der Bodenplatte (2) zur Bajonettscheibe (6) sicherstellen und in der anderen Verschiebestellung in die Ausnehmungen (14) hineinragen.

## Beschreibung

Die Erfindung bezieht sich auf eine Antenne eines Fahrzeuges und ein Verfahren zur Befestigung der Antenne an einem Fahrzeugbauteil gemäß den Merkmalen des jeweiligen Oberbegriffes der unabhängigen Patentansprüche.

Eine derartige zum Beispiel als Dachantenne ausgeführte Antenne wird üblicher weise dadurch an einer Karosserie befestigt, dass die Bodenplatte einen Gewindeansatz aufweist, der durch eine Öffnung in der Karosserie gesteckt wird, wobei dann von innen die Bodenplatte mittels eines Stützelements (an der Bodenplatte angeformter Gewindezapfen) mit der Karosserie unter Einsatz einer Mutter verschraubt wird. Bei dieser Montage sind zwei Personen erforderlich, um eine Montage durchzuführen, da eine Person die Dachantenne in ihrer lagerichtigen Postion an dem Fahrzeugbauteil von aussen festhalten muss, während die andere Person die Verschraubung innerhalb der Karosserie unter Zuhilfenahme von Werkzeug vornimmt.

Die bekannten Dachantennen und deren Montage sind insbesondere in Verbindung mit den heutigen Montageerfordernissen viel zu aufwendig und zeitraubend.

Der Erfindung liegt daher die Aufgabe zu Grunde, eine Vereinfachung der Montage der Antenne zu erreichen, wobei die Montage ohne Einsatz von Werkzeugen, ohne eine zweite Person und ohne sonstige Hilfsmittel erfolgen soll. Trotzdem soll erreicht werden, dass die Antenne nach einer einfachen Montage derart lagerichtig an dem Fahrzeugbauteil befestigt ist, dass die Verbindung dauerhaft spielfrei, ausreichend fest und wasserdicht ist. Es soll weiterhin eine erhöhte Freiheit in der Gestaltung des Montageablaufes erzielt werden, da die Antenne in jeder beliebigen Phase des Montageablaufs von außerhalb der Karosserie her montierbar sein soll, auch wenn ein Dachhimmel in einem Innenbereich der Karosserie bereits angebracht ist.

Diese Aufgabe ist durch die Merkmale des Patentanspruches 1 gelöst.

Erfindungsgemäß ist vorgesehen, dass das an der Bodenplatte der Antenne angeordnete Stützelement derart ausgebildet ist, dass es während der Montage oder nach erfolgter Montage mittels einer Schiebebewegung eine auf das Fahrzeugbauteil wirkende Klemmkraft ohne Einsatz eines Werkzeuges aufbringt und weiterhin so ausgebildet ist, dass die Antenne nach erfolgter Montage lagerichtig, spielfrei und dichtend an dem Fahrzeugbauteil festgelegt ist.

Die Erfindung nutzt daher den Grundgedanken, bekannte Verbindungen, wie Schraubverbindungen, Rastverbindungen und dergleichen zu ersetzen durch eine Klemmkraft, die während und/oder nach erfolgter Montage der Antenne an dem Fahrzeugbauteil aufgebracht wird. Dadurch ist es möglich, dass eine einzige Person die Antenne einfacher montieren kann, ohne dass zum Beispiel eine Mutter auf einen Gewindezapfen von einer zweiten Person aufgeschraubt werden muss, während die erste Person die Antenne lagerichtig an dem Fahrzeugbauteil hält. Dadurch reduziert sich die Teilevielfalt und auch der Entfall eines Montagewerkzeuges ergibt sich in vorteilhafter Weise. Der wesentlichste Vorteif ist aber der, dass nur eine einzige Person die Antenne montieren kann, und zwar in einem Arbeitsschritt, in dem nämlich die Bodenplatte mit dem daran angeformten Stützelement durch eine Öffnung in dem Fahrzeugbauteil durchgeführt und die Antenne so bewegt, insbesondere verschoben und verdreht wird, dass während der Bewegung oder nach Ausführung der Bewegung die Klemmkraft erzeugt wird, wobei das Stützelement weiterhin so ausgebildet ist, dass die weitere Ausführung der Bewegung nicht mehr möglich ist, wenn die Antenne lagerichtig, spielfrei und dichtend an dem Fahrzeugbauteil festgelegt ist. Vorzugsweise wird in diesem Moment die höchste Klemmkraft erzielt.

Die Klemmkraft wird durch eine Schiebebewegung aufgebracht, wobei eine Längsbewegung der Antenne, insbesondere deren Bodenplatte relativ zu dem Fahrzeugbauteil stattfindet. In diesem Zusammenhang wird das Aufschrauben einer Mutter auf den bekannten Gewindezapfen nicht als Drehbewegung verstanden. Ebensowenig soll unter den Begriff Klemmkraft eine Verklebung verstanden werden.

In Weiterbildung der Erfindung ist an der Unterseite der Bodenplatte der Antenne eine Bajonettscheibe angebracht, die durch eine vorbestimmte Bewegungsfolge über den Angriff an der Antenne in eine hierzu passende Öffnung in dem Fahrzeugbauteil hindurch eingeführt und unterhalb des Fahrzeugbauteiles in Eingriff bzw. in räumliche Überdeckung gebracht wird, so dass ein Herausziehen der Bajonettscheibe aus der Öffnung in dem Fahrzeugbauteil in zur Oberfläche des Fahrzeugbauteiles senkrechter Richtung nicht mehr möglich ist. Die Ausbildung des Stützelementes als Bajonettscheibe hat den Vorteil, dass durch eine einfache vorbestimmte Bewegungsfolge die Anordnung der Antenne an dem Fahrzeugbauteil durchgeführt werden kann. Hierzu weist das Fahrzeugbauteil eine Öffnung auf, die mit der Außenkontur des Stützelementes derart korrespondiert, dass die Durchführung des Stützelementes durch die Öffnung des Fahrzeugbauteiles in einer noch nicht lagerichtigen Position der Antenne möglich ist, aber nach Erreichen der lagerichtigen Position der Antenne an dem Fahrzeugbauteil ein Herausziehen verhindert wird. Durch das Zusammenspiel von Kontur der Öffnung in dem Fahrzeugbauteil und Außenkontur des Stützelementes bzw. dessen Bajonettscheibe wird es also ermöglicht, dass die Antenne zunächst in einer nicht lagerichtigen Position durch die Öffnung in dem Fahrzeugbauteil durchgeführt, verschoben und beim Ausführen der Schiebebewegung die Klemmkraft erzeugt wird, die die Antenne während und/oder nach erfolgter Ausführung der Schiebebbewegung an dem Fahrzeugbauteil festsetzt. Diese vorbestimmte Bewegungsfolge (zum Beispiel Einsetzen der Antenne von Oben in die Öffnung und anschließende Schiebebewegung) gestattet es, dass eine einzige Person die Antenne an dem Fahrzeugbauteil in der gewünschten Weise festlegen kann.

In einer weiteren Ausgestaltung der Erfindung wird durch Fortführen der vorbestimmten Bewegungsfolge über den Angriff an der Antenne beim Erreichen der bestimmungsgemäßen Ausrichtung auf oder an dem Fahrzeugbauteil selbsttätig eine Klemmung an dem Fahrzeugbauteil und eine Vorspannung einer Dichtung zwischen der Antenne und dem Fahrzeugbauteil ausgelöst wird. Eine solche Ausgestaltung hat den Vorteil, dass die Antenne durch die Öffnung in dem Fahrzeugbauteil eingesetzt und solange verdreht werden kann, bis die lagerichtige Position der Antenne zu dem Fahrzeugbauteil erreicht ist. Erst wenn diese lagerichtige Position erreicht ist, wird die Klemmkraft (Vorspannung) selbsttätig ausgelöst, die wiederum bewirkt, dass die Bodenplatte unter Zwischenlegung einer Dichtung an das Fahrzeugbauteil herangezogen wird. Dies hat den Vorteil, dass die Dichtung solange nicht wirksam ist, bis die Antenne lagerichtig an dem Fahrzeugbauteil ausgerichtet ist, um eine einfache relative Bewegung zwischen Fahrzeugbauteil und Antenne sicherzustellen. Erst wenn die lagerichtige Position der Antenne erreicht ist, wird die Klemmkraft ausgelöst, wobei durch die Dichtung zusätzlich bewirkt wird, dass die Antenne nicht nur dichtend, sondern auch stabil, insbesondere unter Ausgleich von Toleranzen, an dem Fahrzeugbauteil festgelegt ist.

In Weiterbildung der Erfindung ist vorgesehen, dass die notwendige Klemmkraft durch ein vorgespanntes Federelement erzeugt wird. Dabei kann das Federelement als Spiralfeder, Tellerfederpaket oder dergleichen ausgebildet sein. In vorzugsweiser Ausgestaltung bildet das Federelement eine Baueinheit mit der Bajonettscheibe des Stützelementes.

Wie schon beschrieben, besteht in weiterer Ausgestaltung der Erfindung die vorbestimmte Bewegungsfolge aus den Bewegungsschritten: schräges Einführen des Stützelementes durch die Öffnung in dem Fahrzeugbauteil und anschließende Schiebebewegung hin und zurück, wodurch das Stützelement unter Aufbringung der Klemmkraft in Eingriff gebracht wird mit dem Fahrzeugbauteil.

Weiterhin ist vorgesehen, dass bezüglich einer Vorrichtung zur Befestigung der Antenne das Sttitzelement als Bajonettscheibe ausgebildet ist, dass die Gewindeverbindung eine Spannfeder aufweist, die eine Spannkraft zwischen der Bodenplatte und der Bajonettscheibe herstellt, dass zwischen Bodenplatte und Bajonettscheibe Führungselemente vorgesehen sind, die eine begrenzte Verschiebung der Bodenplatte und der Bajonettscheibe gegeneinander erlauben, dass die Bajonettscheibe Begrenzungselemente aufweist, die zur Öffnung in der Karosserie passen und dass zwischen Bodenplatte und Bajonettscheibe Abstandselemente mit entsprechenden Ausnehmungen im zweiten Bauteil vorgesehen sind, die in der einen Verschiebestellung der Bodenplatte zur Bajonettscheibe einen Abstand der Bodenplatte zur Bajonettscheibe sicherstellen und in der anderen Verschiebestellung in die Ausnehmungen einrasten. Es handelt sich dabei um eine Vorrichtung, die als fertige Baueinheit an den Montageplatz des Fahrzeuges gebracht wird. Die Vorrichtung bildet eine komplette Einheit, so dass eine Vereinfachung der Logistik durch Entfall der Mutter, des Stützelements und dergleichen am Montageort entsteht. Alle notwendigen Teile sind an der Dachantenne verliersicher fertig montiert.

In einer weiteren Ausgestaltung der Erfindung wird vorgeschlagen, dass die Führungselemente Schlitzöffnungen in der Bodenplatte oder vorzugsweise in der Bajonettscheibe sind, die mit Bolzen in Wirkverbindung stehen, die an der Bajonettscheibe oder vorzugsweise an der Bodenplatte befestigt sind. Dadurch lässt sich die Bodenplatte und die Bajonettscheibe innerhalb der Schlitzöffnungen in begrenztem Umfang gegeneinander verschieben, deren Bedeutung im Folgenden noch beschrieben wird.

Die Begrenzungselemente sind Erhebungen, die an der Bajonettscheibe angebracht sind, in Richtung zur Bodenplatte vorstehen und zumindest teilweise innerhalb der Umgrenzung der Bajonettscheibe angeordnet sind.

Die Öffnung in der Karosserie hat im Wesentlichen eine dreieckige Form, wobei die Begrenzungselemente oder Erhebungen der Dreiecksform angepasst sind. Es handelt sich bei der Dreiecksform zwar um eine größere Öffnung in der Karosserie als die bekannte Öffnung. Dadurch wird allerdings das Einführen der Kabel mit Steckern und dergleichen zur Antenne, insbesondere Dachantenne hin, vereinfacht.

Die Erhebungen der Begrenzungselemente können gleichzeitig als Abstandselemente ausgebildet sein, so dass sich eine Vereinfachung dadurch ergibt, dass nicht getrennte Abstandselemente und getrennte Begrenzungselemente vorgesehen sein müssen. Diese Begrenzungs-/Abstandselemente können weiterhin noch die Führungselemente beinhalten, so dass sich eine optimale Vereinfachung ergibt.

Die Bajonettscheibe ist im Wesentlichen ebenfalls dreieckig ausgebildet und der Größe der dreieckigen Öffnung in der Karosserie angepasst. An einer Dreieckseite weist die Bajonettscheibe eine von der Bodenplatte abstehende Winkelfläche auf, die schmäler ist als die entsprechende Seitenlänge der dreieckförmigen Öffnung.

Die Gewindeverbindung weist eine Schraube auf, die in der Bodenplatte eingedreht ist. Es kann natürlich auch eine Steckschraube mit einer Mutter benutzt werden. Zwischen Bodenplatte und Schraubenkopf oder einer dort angeordneten Unterlegscheibe kann eine Abstandshülse vorgesehen sein, die von einer Druckfeder umgeben ist, wodurch die Spannkraft zwischen Bajonettscheibe und Bodenplatte erzeugt wird. Die Bajonettscheibe weist dabei einen Hülsenschlitz auf, der in der Richtung passend zu den Schlitzöffnungen für die Führungselemente ausgebildet ist, so dass die freie Beweglichkeit zwischen Bajonettscheibe und Bodenplatte gegeben ist.

Die Montage der Vorrichtung nach einem der vorhergehenden Ansprüche an einer Fahrzeugkarosserie erfolgt nach den folgenden Verfahrensschritten:

Zunächst wird die Bajonettscheibe so an der Bodenplatte montiert, dass die Begrenzungselemente einen Abstand zur Bodenplatte erzeugen, d.h. die Begrenzungselemente stützen sich auf der Bajonettscheibe oder umgekehrt ab.

Die Dachantenne wird mit der Bajonettscheibe zunächst mit der Winkelfläche der Bajonettscheibe und dann vollständig in die dreieckige Öffnung in der Karosserie eingeführt und dann so in Richtung zur Dachantenne angehoben, dass die Begrenzungselemente innerhalb der dreieckigen Öffnung anliegen und die Umgrenzung der Bajonettscheibe die Öffnung in der Karosserie hintergreift. Die Bajonettscheibe ist damit in der dreieckigen Öffnung, zumindest in der Richtung, in der später die Bodenplatte verschoben wird, festgelegt. Dann wird die Bodenplatte bzw. die Dachantenne mit der Bodenplatte so weit entlang der Schlitzöffnungen und des Hülsenschlitzes bewegt, und zwar gegenüber der festgelegten Bajonettscheibe, bis die Abstandselemente in die Ausnehmungen einrasten. Dann kann sich die volle Federkraft zwischen Bajonettscheibe und Bodenplatte entfalten und die Bodenplatte gegen die Karosserie ziehen, so dass auch die an der Bodenplatte angebrachte Dichtung bzw. Dichtstreifen an die Karosseriefläche angedruckt werden. An der der Bodenplatte zugewandten Oberfläche der Bajonettscheibe können in vorteilhafter Weise Spitzen angebracht sein, die innen an der Karosserie zur Anlage kommen, die Innenlackierung der Karosserie durchdringen und einen Massekontakt herstellen.

Anstelle der Spitzen kann natürlich auch eine entsprechende Zwischenplatte bzw. Auflage auf der Bajonettscheibe vorgesehen sein, die den Massekontakt herstellt. Nach Einrasten der Abstandselemente in die Ausnehmungen ist eine stabile Festlegung der Bodenplatte bzw. der Dachantenne gegenüber der Bajonettscheibe sichergestellt. Die Bajonettscheibe ihrerseits ist über die Begrenzungselemente in der Dachöffnung festgelegt, so dass insgesamt eine exakte, dauerhafte Festlegung der Dachantenne an der Karosserie gegeben ist. Die Festlegung und Montage erfolgt, wie den Verfahrensschritten zu entnehmen ist, ohne Hilfsmittel und ohne Werkzeuge und nur mittels einer Person bzw. eines Monteurs.

Um die Vorrichtung zerstörungsfrei demontieren zu können, wird ein Werkzeug vorgeschlagen, das einen Grundkörper mit zwei gabelförmig angeordneten Leisten aufinreist, deren Dicke im Wesentlichen der Höhe der Abstandselemente entspricht. Der Grundkörper weist weiterhin zumindest ein Griffstück, vorzugsweise zwei Griffstücke auf, so dass eine sichere Handhabung erfolgen kann.

Zur Demontage wird das Werkzeug mit den Leisten zwischen Karosserie und Bodenplatte geschoben, bis die Abstandselemente aus den Ausnehmungen angehoben sind. Dann kann die Bodenplatte gegenüber der Bajonettscheibe wieder so weit zurückgeschoben werden, bis die Abstandselemente sich auf der Bajonettscheibe oder auf der Ebene der Bajonettscheibe abstützen. Dadurch ist emeut der Abstand zwischen Bodenplatte und Bajonettscheibe hergestellt. Die Dachantenne wird dann mit der Bajonettscheibe aus der dreieckigen Öffnung herausgenommen bzw. herausgekippt, so dass nur mehr die elektrische Verbindung zur Antenne gelöst zu werden braucht. Natürlich kann auch eine Demontage der Dachantenne dadurch erfolgen, dass die Verschraubung gelöst und die Teile voneinander getrennt werden, wenn der Zugang zum Innern der Karosserie möglich ist.

Ein Ausführungsbeispiel der Erfindung, auf das diese jedoch nicht beschränkt ist, ist in den Figuren 1 bis 5 gezeigt und im Folgenden erläutert.

Es zeigen:
- Figur 1.: einen Schnitt durch eine Dachantenne mit Befestigungsvorrichtung und Schnitt durch die Fahrzeugkarosserie,
- Figur 2:: eine Ansicht der Dachantenne mit Befestigungsvorrichtung von unten,
- Figur 3:: eine Explosionsdarstellung einer Dachantenne mit Befestigungsvorrichtung und Karosserie von schräg oben,
- Figur 4:: eine Explosionsansicht einer Dachantenne entsprechend Figur 3 mit Sicht von unten und
- Figur 5:: eine Draufsicht auf eine Dachantenne mit Demontagewerkzeug.

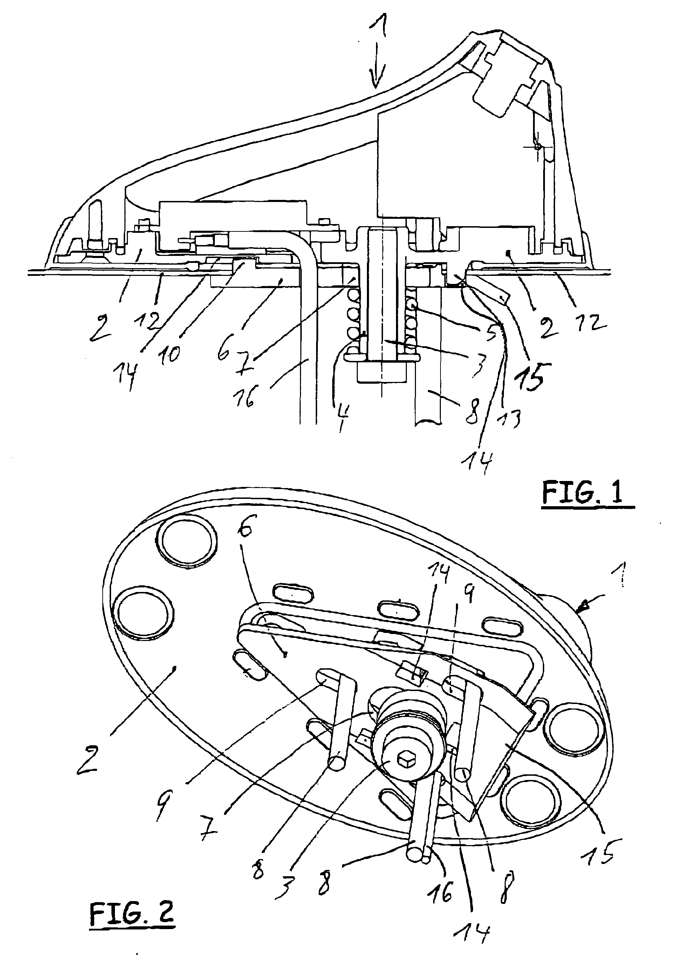

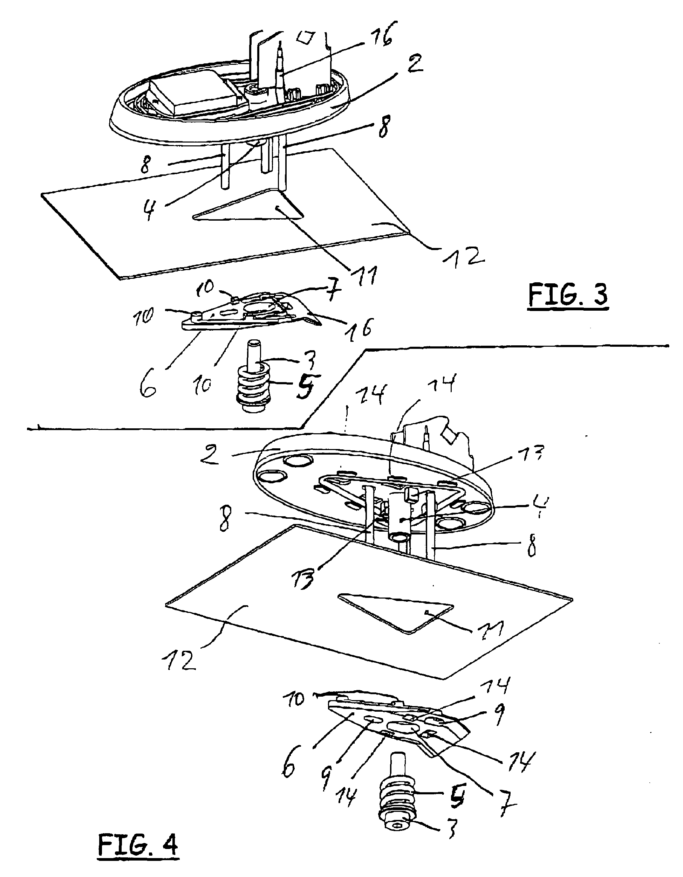

In den Figuren 1 bis 5 ist, soweit im Einzelnen dargestellt, mit 1 eine Dachantenne bezeichnet, die, abgesehen von einer Haube und elektronischen Bauteilen eine mit 2 bezeichnete Bodenplatte aufweist. In der Bodenplatte 2 ist ein Gewindestutzen vorgesehen, in den eine mit 3 bezeichnete Schraube eingedreht ist. An der Bodenplatte ist eine Abstandshülse 4 angearbeitet, so dass die Schraube 3 nur über eine bestimmte Länge eingedreht werden kann. Um die Abstandshülse 4 herum ist eine mit 5 bezeichnete Druckfeder vorgesehen, die sich einerseits an einer Unterlegscheibe und andererseits an einer mit 6 bezeichneten Bajonettscheibe abstützt. An der Bajonettscheibe 6 ist passend zur Abstandshülse 4 (siehe Figur 2) ein Hülsenschlitz 7 vorgesehen, der eine bestimmte Verschiebung der Bajonettscheibe 6 zur Bodenplatte 2 erlaubt. Weiterhin sind an der Bodenplatte (in den Figuren 2 bis 4 ersichtlich) Bolzen 8 befestigt, die durch Schlitzöffnungen 9 in der Bajonettscheibe 6 reichen. Die Bolzen 8 und die Schlitzöffnungen 9 werden insgesamt auch als Führungselemente bezeichnet. An der Bajonettscheibe 6 sind weiterhin (siehe insbesondere Figuren 3 und 4) Erhebungen 10 vorgesehen, die in Verbindung mit einem zugehörigen Rahmen einer dreieckigen Öffnung 11 in der Fahrzeugkarosserie 12 entsprechen. An der Bodenplatte 2 sind weiterhin Abstandselemente 13 vorgesehen, die in Ausnehmungen 14 hineinragen können, wenn die Bajonettscheibe 6 gegenüber der Bodenplatte 2 die richtige Stellung hat. Den Erhebungen 10 an der Bajonettscheibe 6 sind Ausnehmungen 14 in der Bodenplatte 2 zugeordnet, so dass die Begrenzungselemente auch die Funktion der Abstandselemente 13 haben. Die Bajonettscheibe 6 weist an ihrem Ende eine Winkelfläche 15 auf, die so gekröpft ist, dass sie von der Bodenplatte 2 absteht.

Wie ein in den Figuren 1, 2 und 3 dargestelltes Antennenkabel 16 zeigt, kann dieses, wegen der relativ großen dreieckigen Öffnung 11 in der Fahrzeugkarosserie 12, an beliebigen Stellen durchgeführt werden, so dass es vor dem Anbringen der Dachantenne 1 leicht montiert werden kann.

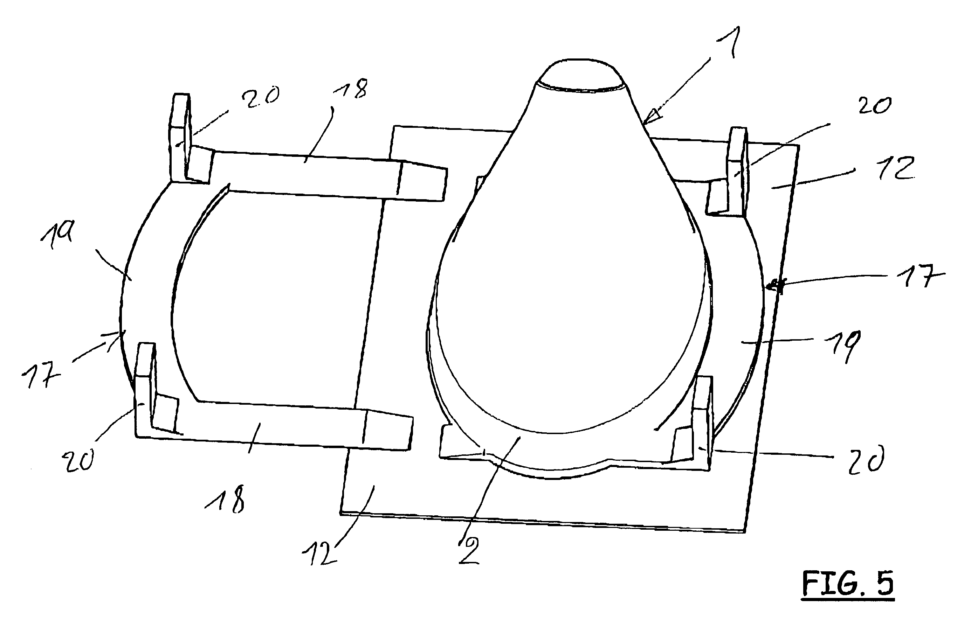

In Figur 5 ist ein mit 17 bezeichnetes Werkzeug dargestellt, das zwei Leisten 18 aufweist, die über einen Grundkörper 19 aneinander befestigt sind. Am Grundkörper 19 sind weiterhin Griffstücke 20 angebracht, die eine gute Handhabe des Werkzeuges 17 sicherstellen. Wie auf der rechten Seite von Figur 5 dargestellt ist, kann das Werkzeug 17 zwischen die Grundplatte 2 und die Fahrzeugkarosserie 12 geschoben werden. Es hebt dabei die Grundplatte 2 gegen die Kraft der Druckfeder 5 von der Fahrzeugkarosserie 12 ab, so dass die Dachantenne 1 mit der Grundplatte 2 entgegen der Montagerichtung so weit verschoben werden kann, bis die Bajonettscheibe 6 mittels der Erhebungen 10 und der Abstandselemente 13 so weit von der Grundplatte 2 beabstandet ist, dass eine leichte Demontage möglich ist. Das Werkzeug ist vorzugsweise aus weichem Kunststoff hergestellt, damit keine Beschädigung des Lacks der Karosserie eintritt.

### Bezugszeichenliste

- 1: Dachantenne
- 2: Bodenplatte
- 3: Schraube
- 4: Abstandshülse
- 5: Druckfeder
- 6: Bajonettscheibe
- 7: Hülsenschlitz
- 8: Bolzen
- 9: Schlitzüffnungen
- 10: Erhebungen
- 11: dreieckige Öffnung
- 12: Fahrzeugkarosserie
- 13: Abstandselemente
- 14: Ausnehmungen
- 15: Winkelfläche
- 16: Antennenkabel
- 17: Werkzeug
- 18: Leisten
- 19: Grundkörper
- 20: Griffstücke

## Patentansprüche

1. Antenne (1), insbesondere eine Dachantenne, eines Fahrzeuges mit einem Stützelement zur Festlegung der Antenne (1) an einem Fahrzeugteil (17 a), wobei die Antenne (1) eine Bodenplatte (2) aufweist, an der das Stützelement angeordnet ist, das durch eine Öffnung in dem Fahrzeugbauteil (17 a) einsetzbar ist, **dadurch gekennzeichnet, dass** es während der Montage oder nach erfolgter Montage mittels einer Schiebebewegung eine auf das Fahrzeugbauteil (17 a) wirkende Klemmkraft ohne Einsatz eines Werkzeuges aufbringt und weiterhin so ausgebildet ist, dass die Antenne (1) nach erfolgter Montage lagerichtig, spielfrei und dichtend an dem Fahrzeugbauteil (17 a) festgelegt ist.

2. Antenne (1) nach Anspruch 1, **dadurch gekennzeichnet, dass** an der Unterseite der Bodenplatte (2) eine Bajonettscheibe (9) angeordnet ist, die durch eine vorbestimmte Bewegungsfolge über den Angriff an der Antenne (1) in die zu ihr passende Öffnung in dem Fahrzeugbauteil (17 a) hindurch eingeführt und unterhalb des Fahrzeugbauteiles (17 a) in Eingriff bzw in räumliche Überdeckung gebracht wird, so dass ein Herausziehen der Bajonettscheibe (9) aus der Öffnung des Fahrzeugbauteiles (17 a) in zur Oberfläche des Fahrzeugbauteiles (17 a) senkrechter Richtung nicht mehr möglich ist.

3. Antenne (1) nach einem der Ansprüche 1 oder 2. **dadurch gekennzeichnet, dass** bei Fortführen der vorbestimmten Bewegungsfolge über den Angriff an der Antenne (1) beim Erreichen der bestimmungsgemäßen Ausrichtung auf dem Fahrzeugbauteil (17 a) selbsttätig eine Klemmung an dem Fahrzeugbauteil (17 a) und eine Vorspannung einer Dichtung zwischen der Antenne (1) und dem Fahrzeugbauteil (17 a) ausgelöst wird.

4. Antenne (1) nach einem der vorhergehenden Ansprüche, **dadurch gekennzeichnet, dass** ein Federelement vorgesehen ist, wobei die notwendige Klemmkraft durch das vorgespannte Federelement erzeugt wird.

5. Antenne (1) nach Anspruch 4, **dadurch gekennzeichnet, dass** das Federelement eine Spiralfeder, eine Tellerfeder, ein Tellerfederpaket oder dergleichen ist.

6. Antenne (1) nach einem der vorhergehenden Ansprüche, **dadurch gekennzeichnet, dass** das Federelement und die Bajonettscheibe (9) eine Baueinheit bilden.

7. Antenne (1) nach einem der vorhergehenden Ansprüche, **dadurch gekennzeichnet, dass** die Bewegungsfolge aus den Bewegungsschritten: senkrechtes Einführen des Stützelementes, insbesondere der Bajonettscheibe (9) durch die Öffnung in dem Fahrzeugbauteil (17 a) und danach in Eingriff bringen unter dem Fahrzeugbauteil (17 a) durch eine Drehbewegung besteht.

8. Antenne (1) nach einem der vorhergehenden Ansprüche, **dadurch gekennzeichnet, dass** das Stützelement als Bajonettscheibe (6) ausgebildet ist, dass die Gewindeverbindung (Schraube 3) eine Spannfeder (Druckfeder 5) aufweist, die eine Spannkraft zwischen der Bodenplatte (2) und der Bajonettscheibe (6) herstellt, dass zwischen Bodenplatte (2) und Bajonettscheibe (6) Führungselemente (Bolzen 8, Schlitzöffnungen 9, Abstandshülse 4, Hülsenschlitz 7) vorgesehen sind, die eine begrenzte Verschiebung der Bodenplatte (2) und der Bajonettscheibe (6) zueinander erlauben, dass die Bajonettscheibe (6) Begrenzungselemente (Erhebungen 10) aufweist, die zur Öffnung in der Karosserie (dreieckige Öffnung 11) passen und dass zwischen Bodenplatte (2) und Bajonettscheibe (6) Abstandselemente (13) mit entsprechenden Ausnehmungen (14) im zweiten Bauteil vorgesehen sind, die in der einen Verschiebestellung der Bodenplatte (2) zur Bajonettscheibe (6) einen Abstand der Bodenplatte (2) zur Bajonettscheibe (6) sicherstellen und in der anderen Verschiebestellung in die Ausnehmungen (14) hineinragen.

9. Antenne (1) nach Anspruch 8, **dadurch gekennzeichnet, dass** die Führungselemente Schlitzöffnungen (9) in der Bodenplatte (2) oder vorzugsweise in der Bajonettscheibe (6) sind, die mit Bolzen (8) in Wirkverbindung stehen, die an der Bajonettscheibe (6) oder vorzugsweise an der Bodenplatte (2) befestigt sind.

10. Antenne (1) nach Anspruch 8, **dadurch gekennzeichnet, dass** die Begrenzungselemente Erhebungen (10) an der Bajonettscheibe (6) sind, die in Richtung zur Bodenplatte (2) vorstehen.

11. Antenne (1) nach einem der vorhergehenden Ansprüche, **dadurch gekennzeichnet, dass** die Öffnung in der Karosserie eine im Wesentlichen dreieckige Form (dreieckige Öffnung 11) hat und dass die Begrenzungselemente (Erhebungen 10) der Dreiecksform angepasst sind.

12. Antenne (1) nach einem der vorhergehenden Ansprüche, **dadurch gekennzeichnet, dass** die Erhebungen (10) der Begrenzungselemente als Abstandselemente (13) ausgebildet sind.

13. Antenne (1) nach einem der vorhergehenden Ansprüche, **dadurch gekennzeichnet, dass** die Bajonettscheibe (6) im Wesentlichen dreieckig ausgebildet ist und an einer Dreiecksseite eine von der Bodenplatte (2) abstehende Winkelfläche (15) aufweist.

14. Antenne (1) nach einem der vorhergehenden Ansprüche, **dadurch gekennzeichnet, dass** die Gewindeverbindung eine Schraube (3) aufweist, die in der Bodenplatte (2) eingedreht ist und von einer Druckfeder (5) umgeben ist und dass die Bajonettscheibe (6) einen Hülsenschlitz (7) aufweist, der in der Richtung passend zu den Schlitzöffnungen (9) für die Führungselemente ausgebildet ist.

15. Antenne (1) nach Anspruch 14, **dadurch gekennzeichnet, dass** zwischen Bodenplatte (2) und Schraubenkopf oder einer dort angeordneten Unterlegscheibe eine Abstandshülse (4) vorgesehen ist.

16. Verfahren zur Montage einer Antenne (1) nach einem der vorhergehenden Ansprüche an einer Fahrzeugkarosserie, **dadurch gekennzeichnet, dass** die Bajonettscheibe (6) so an der Bodenplatte (2) vormontiert wird, dass die Begrenzungselemente (Erhebungen 10, Abstandselemente 13, Ausnehmungen 14) einen Abstand zur Bodenplatte (2) erzeugen, dass die Bajonettscheibe (6) zunächst mit der Winkelfläche (15) und dann vollständig in die dreieckige Öffnung (11) in der Fahrzeugkarosserie (12) eingeführt wird und dann so in Richtung zur Dachantenne (1) angehoben wird, dass die Begrenzungselemente (Erhebungen 10, Abstandelemente 13, Ausnehmungen 14) an der dreieckigen Öffnung (11) anliegen und dass abschließend die Bodenplatte (2) so weit entlang der Schlitzöffnungen (9) und des Hülsenschlitzes (7) bewegt wird, bis die Abstandselemente (13) in die Ausnehmungen (14) bzw. die Erhebungen (10) in die Ausnehmungen (14) einrasten.

17. Werkzeug zur Demontage der Antenne (1) nach einem der vorhergehenden Ansprüche an einer Fahrzeugkarosserie, **gekennzeichnet durch** einen Grundkörper (19) mit zwei gabelförmig angeordneten Leisten (18), deren Dicke im Wesentlichen der Höhe der Abstandselemente (13) entspricht, und mit zumindest einem Griffstück (20), wobei die Leisten (18) an ihren freien Enden abgeflacht sind.

18. Verfahren zur Demontage einer Antenne (1) nach einem der vorhergehenden Ansprüche an einer Fahrzeugskarosserie, **dadurch gekennzeichnet, dass** das Werkzeug (17) mit den Leisten (18) zwischen die Fahrzeugkarosserie (12) und die Bodenplatte (2) geschoben wird, bis die Abstandselemente (13) und/oder Erhebungen (10) aus den Ausnehmungen (14) angehoben sind, dass die Bodenplatte (2) gegenüber der Bajonettscheibe (6) so weit verschoben wird, bis die Abstandselemente (13) und/oder die Erhebungen (10) sich auf der Bajonettscheibe (6) abstützen und dass die Dachantenne (1) mit Bodenplatte (2) und Bajonettscheibe (6) aus der dreieckigen Öffnung (11) herausgehoben wird.
